# EUROPÄISCHE PATENTANMELDUNG

(11) **EP 1 197 256 A1**
(43) Veröffentlichungstag der Anmeldung: **17.04.2002**
(21) Anmeldenummer: 01122426.8
(22) Anmeldetag: 20.09.2001
(51) Int. Cl.: B01D 53/22

(54) **Verfahren und Vorrichtung zur Erzeugung von heissen Verbrennungsabgasen**

(30) Priorität: 13.10.2000 US 239886 P; 21.03.2001 CH 5132001
(71) Anmelder: ALSTOM (Switzerland) Ltd, 5401 Baden (CH)
(72) Erfinder: Griffin, Timothy, Albert, Dr., 5408 Ennetbaden (CH); Winkler, Dieter, 79787 Lauchringen (DE); Carroni, Richard, 5443 Niederrohrdorf (CH)
(74) Vertreter: Liebe, Rainer

(57) **Zusammenfassung**

Die Erfindung betrifft ein Verfahren zur Erzeugung von heißen Verbrennungsabgasen (11), insbesondere für eine Gasturbinenanlage. In einem Brenner (2) findet eine Verbrennung statt, die heiße Verbrennungsabgase (11) erzeugt. Ein Teil (17) der Verbrennungsabgase (11) wird abgezweigt und einem ersten Eingang (16) einer Sauerstofftrenneinrichtung (5) zugeführt. Einem zweiten Eingang (23) der Sauerstofftrenneinrichtung (5) wird ein sauerstoffhaltiges Gas (20) zugeführt. Die Sauerstofftrenneinrichtung (5) weist Sauerstofftrennmittel (6) auf, die dem sauerstoffhaltigen Gas (20) Sauerstoff entnehmen und dem abgezweigten Abgas (17) zuführen und bezüglich seines Sauerstoffgehaltes reduziertes sauerstoffhaltiges Gas (34) sowie mit Sauerstoff angereichertes abgezweigtes Abgas (25) erzeugt. Das mit Sauerstoff angereicherte, abgezweigte Abgas (25) sowie ein Kraftstoff (31) oder ein Kraftstoff-Dampf-Gemisch werden dem Brenner (2) zugeführt und bilden ein Verbrennungsgemisch, das im Brenner (2) unter Ausbildung der heißen Verbrennungsabgase (11) verbrennt.

Um den Wirkungsgrad eines derartigen Verfahrens zu verbessern, enthält der Brenner (2) einen Katalysator, der die Verbrennung initiiert und/oder stabilisiert.

## Beschreibung

### Technisches Gebiet

Die Erfindung betrifft ein Verfahren sowie eine Vorrichtung zur Erzeugung von heißen Verbrennungsabgasen, insbesondere für eine Gasturbinenanlage, mit den Merkmalen des Oberbegriffes des Anspruchs 1 bzw. des Anspruchs 4.

### Stand der Technik

Aus der EP 0 882 486 A1 ist eine Vorrichtung der eingangs genannten Art bekannt, die einen Brenner aufweist, dessen Ausgangsseite mit einer Abgasleitung verbunden ist, von der eine Rückführungsleitung abzweigt. In diesem Brenner findet eine Verbrennung statt, die heiße Verbrennungsabgase erzeugt. Diese Verbrennungsabgase treten durch die Abgasleitung aus dem Brenner aus, wobei ein Teil der Verbrennungsabgase über die Rückführungsleitung abgezweigt wird. Die Vorrichtung ist mit einer Sauerstofftrenneinrichtung ausgestattet, deren erster Eingang mit der Rückführungsleitung und deren zweiter Eingang mit einer Gasversorgung verbunden ist, die sauerstoffhaltiges Gas liefert. Die Sauerstofftrenneinrichtung wird somit über ihren ersten Eingang mit abgezweigtem bzw. rückgeführtem Abgas und über ihren zweiten Eingang mit sauerstoffhaltigem Gas, z.B. verdichtete Umgebungsluft versorgt. Die Sauerstofftrenneinrichtung enthält Sauerstofftrennmittel, z.B. eine lonentransportmembran. Diese Sauerstofftrennmittel entnehmen dem sauerstoffhaltigen Gas Sauerstoff und führen diesen dem abgezweigten Abgas zu, wodurch der Sauerstoffgehalt des sauerstoffhaltigen Gases reduziert und sauerstoffangereichertes, abgezweigtes Abgas erzeugt wird. Die Sauerstofftrenneinrichtung weist einen ersten Ausgang für das mit Sauerstoff angereicherte, abgezweigte Abgas sowie einen zweiten Ausgang für das hinsichtlich seines Sauerstoffgehalts reduzierte Gas auf. Eine Eingangsseite des Brenners ist mit dem ersten Ausgang der Sauerstofftrenneinrichtung sowie mit einer Kraftstoffversorgung verbunden, die Kraftstoff liefert. Auf diese Weise wird spätestens im Brenner ein Verbrennungsgemisch gebildet, das im Brenner unter Ausbildung der gewünschten heißen Verbrennungsabgase verbrennt. Die so erzeugten heißen Verbrennungsabgase können insbesondere in einer Gasturbinenanlage zur Erzeugung von elektrischer Energie verwendet werden.

Durch die Verwendung einer derartigen Vorrichtung bzw. eines derartigen Verfahrens ist es möglich, bei der Energieerzeugung die Schadstoffemissionen, insbesondere die CO₂-Emissionen bei der Verbrennung fossiler Kraftstoffe erheblich zu reduzieren.

Der Kerngedanke dieser Verfahren und Vorrichtungen ist darin zu sehen, daß für die Verbrennung reiner Sauerstoff als Oxidationsmittel verwendet wird, da sich dadurch die Abgasnachbehandlung erheblich vereinfacht. Dies ist darauf zurückzuführen, daß ein Verbrennungsvorgang mit molekularem Sauerstoff ein Abgas liefert, das im wesentlichen nur aus CO₂ und H₂O besteht. Da Sauerstoff, der in Kälteanlagen erzeugt wird, sehr teuer ist, wurden neue Technologien zur Sauerstoffherstellung entwickelt. Hierbei sind Sauerstofftrenneinrichtungen von Bedeutung, die mit einer für Sauerstoffionen und für Elektronen leitenden Membran, sogenannte MCM-Membran (mixed conducting membrane), ausgestattet sind. Eine derartige MCM-Membran besitzt eine Rückhalteseite, auf der sich das sauerstoffhaltige Gas befindet, sowie eine Durchgangsseite, auf der sich das anzureichernde Gas befindet. Die MCM-Membran transportiert Sauerstoffionen von der Rückhalteseite auf die Durchgangsseite und bewirkt einen Elektronentransport von der Durchgangsseite zur Rückhalteseite. Hierdurch wird dem Gas auf der Rückhalteseite Sauerstoff entzogen und dem Gas auf der Durchgangsseite zugeführt. Um die Leistungsfähigkeit einer solchen MCM-Membran zu erhöhen, ist es vorteilhaft, auf der Durchgangsseite eine relativ hohe Strömungsgeschwindigkeit einzustellen, um die Sauerstoffkonzentration auf der Durchgangsseite möglichst niedrig zu halten. Eine hohe Strömungsgeschwindigkeit auf der Durchgangsseite führt jedoch nur zu einer relativ geringen Anreicherung der rückgeführten Abgase mit Sauerstoff, so daß dieses Sauerstoff-Abgas-Gemisch nur eine schwache Reaktivität zeigt und für herkömmliche Verbrennungsmethoden nicht geeignet ist.

Aus der US 5 976 223 sind ein Verfahren und eine Vorrichtung zur Herstellung von Kohlendioxid und Sauerstoff bekannt. In eine erste mit einer MCM-Membran arbeitende Sauerstofftrenneinrichtung wird auf der Rückhalteseite komprimiertes, erhitztes und sauerstoffhaltiges Gas eingeleitet. Auf der Durchgangsseite wird ein gasförmiger Kraftstoff eingebracht, der mit dem zugeführten Sauerstoff reagiert und Kohlendioxid bildet. Das bezüglich seines Sauerstoffgehaltes reduzierte sauerstoffhaltige Gas wird durch die dabei ablaufende exotherme Reaktion erhitzt. Das so erhitzte sauerstoffhaltige Gas wird dann einer zweiten mit einer MCM-Membran arbeitenden Sauerstofftrenneinrichtung auf deren Rückhalteseite zugeführt. Auf der Durchgangsseite dieser zweiten Sauerstofftrenneinrichtung sammelt sich dann der gewünschte Sauerstoff.

In der WO 98/55394 ist ein Verfahren beschrieben, bei dem eine Sauerstofftrenneinrichtung, die mit einer MCM-Membran arbeitet, als Brenner verwendet wird, um heiße Verbrennungsabgase für eine Gasturbinenanlage herzustellen. Hierbei wird Umgebungsluft komprimiert, erhitzt und der Rückhalteseite dieses Membran-Reaktors zugeführt. Der Durchgangsseite wird ein Gemisch aus rückgeführtem Abgas und Kraftstoff zugeleitet. Im Membran-Reaktor wird dann der zugeführten Luft Sauerstoff entzogen und dem Gemisch zugeführt. Auf der Durchgangsseite reagiert dann der Kraftstoff mit dem Sauerstoff auf der Membran-Oberfläche, die mit einem Oxidationskatalysator beschichtet ist. Die so gebildeten heißen Abgase werden dann einer Turbine zugeführt.

Aus der WO 98/55208 ist ein weiteres Verfahren zur Herstellung heißer Verbrennungsabgase zum Betrieb einer Turbine bekannt, bei dem verdichtete Frischluft in einem ersten Brenner erhitzt und der Rückhalteseite einer mit einer MCM-Membran arbeitenden Sauerstofftrenneinrichtung zugeführt wird. Rückgeführtes Abgas wird zusammen mit Kraftstoff einem zweiten Brenner zugeführt, der als Katalysator ausgebildet sein kann. Die dort erzeugten Verbrennungsabgase werden dann der Durchgangsseite der Sauerstofftrenneinrichtung zugeleitet, wo sie mit Sauerstoff angereichert werden. Die mit Sauerstoff angereicherten Abgase werden dann einem dritten Brenner zugeführt und dort mit Kraftstoff verbrannt, um heiße Verbrennungsabgase zu erzeugen, die eine Turbine antreiben.

### Darstellung der Erfindung

Die vorliegende Erfindung beschäftigt sich mit dem Problem, für ein Verfahren, bzw. eine Vorrichtung der eingangs genannten Art eine Ausführungsform anzugeben, die einen erhöhten Wirkungsgrad besitzt.

Erfindungsgemäß wird dieses Problem durch ein Verfahren mit den Merkmalen des Anspruchs 1 gelöst. Die Erfindung beruht auf dem allgemeinen Gedanken, die Verbrennung der mit Sauerstoff angereicherten Abgase mit dem zugeführten Kraftstoff bzw. dem zugeführten Kraftstoff-Dampf-Gemisch katalytisch zu iniizieren bzw. zu stabilisieren. Durch diese Vorgehensweise kann das Verbrennungsgemisch auch bei relativ geringen Sauerstoffanteilen hinreichend reagieren, um die gewünschten heißen Verbrennungsabgase zu erzeugen. Da somit ein relativ geringer Sauerstoffgehalt im Verbrennungsgemisch ausreicht, kann die Strömungsgeschwindigkeit der rückgeführten Abgase auf der Durchgangsseite einer mit einer MCM-Membran arbeitenden Sauerstofftrenneinrichtung erhöht werden, wodurch sich deren Wirkungsgrad und somit der Wirkungsgrad des Gesamtprozesses erhöht.

Das der Erfindung zugrundeliegende Problem wird auch durch eine Vorrichtung mit den Merkmalen des Anspruchs 4 gelöst. Die Erfindung beruht hierbei auf dem allgemeinen Gedanken, den Brenner mit einem Katalysator auszustatten, der die Verbrennung des Verbrennungsgemisches iniziiert bzw. stabilisiert. Auch hier wird dadurch die Möglichkeit geschaffen, Verbrennungsabgase mit einem relativ niedrigen Sauerstoffgehalt zu verbrennen, um die gewünschten heißen Verbrennungsabgase zu erzeugen. Wie oben erläutert kann dadurch der Wirkungsgrad bei der Herstellung der heißen Verbrennungsabgase erhöht werden. Bei einer Integration der erfindungsgemäßen Vorrichtung bzw. des erfindungsgemäßen Verfahrens in eine Gasturbinenanlage kann auch deren Wirkungsgrad erhöht werden.

Bei einer Weiterbildung kann eine zweite Sauerstofftrenneinrichtung vorgesehen sein, wobei einem ersten Eingang dieser zweiten Sauerstofftrenneinrichtung der nicht abgezweigte bzw. nicht rückgeführte Teil der heißen Verbrennungsabgase sowie Kraftstoff oder Kraftstoff-Dampf-Gemisch zugeführt werden und dabei eine Mischung bilden und wobei einem zweiten Eingang dieser zweiten Sauerstofftrenneinrichtung das bezüglich seines Sauerstoffgehaltes reduzierte sauerstoffhaltige Gas zugeführt wird, wobei auch diese zweite Sauerstofftrenneinrichtung Sauerstofftrennmittel, z.B. eine MCM-Membran, aufweist, die dem sauerstoffhaltigen Gas noch mehr Sauerstoff entnehmen und der Mischung zuführen, wobei einerseits die Mischung mit dem Sauerstoff verbrennt und heiße Verbrennungsabgase erzeugt, während andererseits ein hinsichtlich seines Sauerstoffgehalts nochmals reduziertes und erhitztes Gas, sauerstoffarmes Gas, erzeugt wird. Durch diese Maßnahmen kann sowohl heißes Verbrennungsabgas als auch heißes, sauerstoffarmes Gas bereitgestellt werden, das beispielsweise in einer nachgeschalteten Gasturbinenanlage zur Herstellung von Strom verwendet werden kann. Insgesamt ergibt sich aufgrund der erzielbaren höheren Ausgangstemperaturen ein höherer Wirkungsgrad für die Gesamtanlage.

Bei einer bevorzugten Weiterbildung kann der Katalysator des Brenners als Metalloxid-Katalysator ausgebildet sein. Geeignete Metalloxide stammen beispielsweise aus der Perovskit-Familie, z.B. La₁₋ₓSrₓBO₃, wobei die B-Seite Elemente der Übergangsmetalle, z.B. Mn, Fe, Co, enthält. Zusätzlich können einfache Metalloxide aus Mn oder Ce eingesetzt werden. Metalloxid-Katalysatoren zeichnen sich durch ihre hohe Hitzebeständigkeit aus, benötigen jedoch im Unterschied zu Edelmetall-Katalysatoren höhere Einlaßtemperaturen, die im vorliegenden Fall jedoch vorhanden sind.

Als besonders vorteilhaft haben sich Katalysatoren erwiesen, die einen monolithischen Träger mit parallelen Durchströmungskanälen besitzen. Derartige Katalysatoren zeichnen sich durch ihren relativen geringen Durchströmungswiderstand aus. Katalysatoren dieser Art kommen beispielsweise bei Abgasreinigungsanlagen von Fahrzeugen in sogenannten "Drei-Wege-Katalysatoren" zum Einsatz.

Bei einer besonders vorteilhaften Ausführungsform kann der Brenner mit einem Wärmetauscher wärmeübertragend verbunden sein, der das sauerstoffhaltige Gas vor dem Eintritt in die Sauerstofftrenneinrichtung erwärmt. Beispielsweise bildet der Wärmetauscher die äußere Hülle des Brenners, wodurch ein besonders hoher Wirkungsgrad für den Wärmetauscher erreicht wird.

Bevorzugt wird eine Ausführungsform, bei der die Sauerstofftrenneinrichtung eine erste Kammer und eine zweite Kammer aufweist, und bei der die Sauerstofftrennmittel eine Membran, z.B. MCM-Membran, aufweisen, die die beiden Kammern voneinander trennt und Sauerstoff von der einen Kammer in die andere Kammer transportiert. Besonders vorteilhaft ist hierbei eine Ausführungsform, bei der beide Kammer gleichgerichtet und parallel zur Membran durchströmt werden. Durch diese gleichgerichtete Durchströmung ist es möglich, in der Membran ein relativ flaches Temperaturprofil zu erzeugen und zwar sowohl parallel zur Strömung als auch senkrecht dazu. Dies hat zur Folge, daß thermische Spannungen reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert. Es zeigen, jeweils schematisch,
- Fig. 1: eine schaltplanartige Prinzipdarstellung einer erfindungsgemäßen Vorrichtung bei einer ersten Ausführungsform,
- Fig. 2: eine Darstellung wie in Fig. 1, jedoch bei einer zweiten Ausführungsform,
- Fig. 3: eine schaltplanartige Prinzipdarstellung einer Gasturbinenanlage, die eine erfindungsgemäße Vorrichtung enthält,
- Fig. 4: eine Prinzipdarstellung im Längsschnitt durch einen erfindungsgemäß ausgebildeten Brenner bei einer ersten Ausführungsform und
- Fig. 5: eine Ansicht wie in Fig. 4, jedoch bei einer zweiten Ausführungsform.

### Wege zur Ausführung der Erfindung

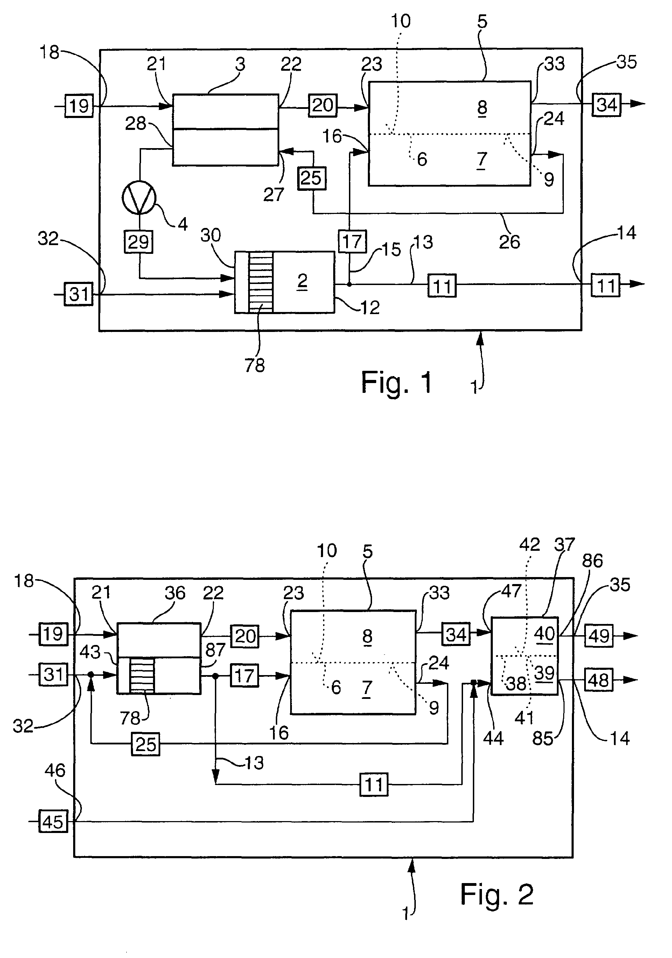

Entsprechend Fig. 1 besitzt eine Vorrichtung 1, die hier durch einen Rahmen symbolisiert ist, einen Brenner 2, einen Wärmetauscher 3, einen Verdichter 4 und eine Sauerstofftrenneinrichtung 5. Diese Sauerstofftrenneinrichtung 5 weist als Sauerstofftrennmittel eine MCM-Membran 6 auf, die hier durch eine punktierte Linie symbolisiert ist. Diese MCM-Membran 6 trennt in der Sauerstofftrenneinrichtung 5 eine erste Kammer 7 von einer zweiten Kammer 8, wobei der ersten Kammer 7 eine Durchgangsseite 9 und der zweiten Kammer 8 eine Rückhalteseite 10 der Membran 6 ausgesetzt ist. Im Brenner 2 findet eine Verbrennung statt, die heiße Verbrennungsabgase 11 erzeugt, die an einer Ausgangsseite 12 des Brenners 2 in eine damit verbundene Abgasleitung 13 eintreten. Bei 14 werden die gewünschten heißen Verbrennungsabgase 11 aus der Vorrichtung 1 herausgeführt.

Von der Abgasleitung 13 zweigt eine Rückführungsleitung 15 ab, die an einen ersten Eingang 16 der Sauerstofftrenneinrichtung 5 angeschlossen ist. Durch diesen ersten Eingang 16 kann abgezweigtes Abgas 17 in die erste Kammer 7, also auf die Durchgangsseite 9 der Membran 6 gelangen.

Bei 18 tritt sauerstoffhaltiges Gas 19, z.B. Luft, in die Vorrichtung 1 ein und wird dort einem ersten Eingang 21 des Wärmetauschers 3 zugeführt. Im Wärmetauscher 3 wird das sauerstoffhaltige Gas 19 erwärmt, so daß aus einem ersten Ausgang 22 des Wärmetauschers 3 erwärmtes sauerstoffhaltiges Gas 20 austritt. Der erste Ausgang 22 des Wärmetauschers 3 ist mit einem zweiten Eingang 23 der Sauerstofftrenneinrichtung 5 verbunden, so daß das erwärmte, sauerstoffhaltige Gas 20 in die zweite Kammer 8, also an der Rückhalteseite 10 der Membran 6 eintritt. Die MCM-Membran 6 bewirkt nun einen Transport von Sauerstoff von der Rückhalteseite 10 zur Durchgangsseite 9. Dabei wird dem zugeführten sauerstoffhaltigen Gas 20 Sauerstoff entzogen, wodurch sich dessen Sauerstoffgehalt reduziert. Gleichzeitig wird dem abgezweigten Abgas 17 Sauerstoff zugeführt, wodurch dieses mit Sauerstoff angereichert wird. An einem ersten Ausgang 24 der Sauerstofftrenneinrichtung 5 tritt dementsprechend mit Sauerstoff angereichertes, abgezweigtes Abgas 25 aus der ersten Kammer 7 aus und wird über eine Leitung 26 einem zweiten Eingang 27 des Wärmetauschers 3 zugeführt. Im Wärmetauscher 3 wird das mit Sauerstoff angereicherte, rückgeführte Abgas 25 gekühlt. Aus einem zweiten Ausgang 28 des Wärmetauschers 3 tritt nun gekühltes, angereichertes Abgas 29 aus, das im Verdichter 4 außerdem verdichtet wird. Dieses verdichtete, angereicherte Abgas 29 wird dann einer Eingangsseite 30 des Brenners 2 zugeführt. Der Eingangsseite 30 des Brenners 2 wird außerdem Kraftstoff oder ein Kraftstoff-Dampf-Gemisch 31 zugeführt, das bei 32 in die Vorrichtung 1 gelangt. Im Brenner 2 bildet sich dann ein Verbrennungsgemisch aus den mit Sauerstoff angereicherten, rückgeführten Abgasen 29 und dem zugeführten Kraftstoff 31.

Erfindungsgemäß enthält der Brenner 2 einen Katalysator 78, der die Verbrennungsreaktion iniziiert und/oder stabilisiert. Bei dieser Verbrennung entstehen die gewünschten heißen Verbrennungsabgase 11.

An einem zweiten Ausgang 33 der Sauerstofftrenneinrichtung 5 tritt sauerstoffhaltiges Gas 34 aus, das nunmehr einen reduzierten Sauerstoffgehalt, jedoch eine erhöhte Temperatur besitzt. Dieses sauerstoffhaltige Gas 34 tritt bei 35 aus der Vorrichtung 1 aus. Die Sauerstofftrenneinrichtung 5 arbeitet hier außerdem als Wärmetauscher, wobei beachtenswert ist, daß die beiden Kammern 7 und 8 gleichgerichtet durchströmt werden, um Temperaturspannungen in der Membran 6 möglichst gering zu halten.

Bei einer besonderen Ausführungsform können der Brenner 2 und der Wärmetauscher 3 zu einer Wärmetauscher-Brenner-Einheit zusammengefaßt werden. Entsprechend Fig. 2 besitzt eine entsprechende Ausführungsform der Vorrichtung 1 somit eine solche Wärmetauscher-Brenner-Einheit 36. Die Vorrichtung 1 weist wieder die Sauerstofftrenneinrichtung 5 auf, die bei dieser Ausführungsform im folgenden als erste Sauerstofftrenneinrichtung 5 bezeichnet wird. Die Vorrichtung 1 enthält zusätzlich eine zweite Sauerstofftrenneinrichtung 37, die ebenfalls mit einer MCM-Membran 38 als Sauerstofftrennmittel arbeitet. Diese Membran 38 trennt eine erste Kammer 39 von einer zweiten Kammer 40 und besitzt eine der ersten Kammer 39 ausgesetzte Durchgangsseite 41 und eine der zweiten Kammer 40 ausgesetzte Rückhalteseite 42.

Auch in der Wärmetauscher-Brenner-Einheit 36 findet eine Verbrennung statt, die heiße Verbrennungsabgase 11 erzeugt, die an einer Ausgangsseite 87 austreten. Ein Teilstrom 17 dieser Verbrennungsabgase 11 wird auch hier abgezweigt und der ersten Sauerstofftrenneinrichtung 5 zugeleitet. Die abgezweigten Abgase 17 treten somit in die erste Kammer 7 der ersten Sauerstofftrenneinrichtung 5 ein. Das dort erzeugte, mit Sauerstoff angereicherte, abgezweigte Abgas 25 wird dann einer Eingangsseite 43 der Wärmetauscher-Brenner-Einheit 36 zugeführt. Außerdem wird der Eingangsseite 43 der Wärmetauscher-Brenner-Einheit 36 der Kraftstoff bzw. das Kraftstoff-Dampf-Gemisch 31 zugeführt.

Der nicht abgezweigte bzw. nicht rückgeführte Teil der erzeugten Verbrennungsabgase 11 wird einem ersten Eingang 44 der zweiten Sauerstofftrenneinrichtung 37 zugeführt, wobei diesem ersten Eingang 44 außerdem Kraftstoff 45 zugeführt wird, der bei 46 in die Vorrichtung 1 eintritt. Somit wird in die erste Kammer 39, also auf die Durchgangsseite 41, ein Gemisch aus Verbrennungsabgasen 11 und Kraftstoff 45 geleitet.

Das bei 18 in die Vorrichtung 1 eintretende sauerstoffhaltige Gas 19 wird in der Wärmetauscher-Brenner-Einheit 36 stark erwärmt und als erwärmtes sauerstoffhaltiges Gas 20 der ersten Sauerstofftrenneinrichtung 5 zugeführt. Aus dieser tritt das bezüglich seines Sauerstoffgehalts reduzierte sauerstoffhaltige Gas 34 aus dem zweiten Ausgang 33 aus und durch einen zweiten Eingang 47 der zweiten Sauerstofftrenneinrichtung 37 in deren zweiten Kammer 40 ein und befindet sich dann auf der Rückhalteseite 42. Die Membran 38 bewirkt einen Transport von Sauerstoff aus der zweiten Kammer 40 in die erste Kammer 39, wodurch sich in der ersten Kammer 39 ein brennbares Gemisch bildet. Aufgrund der herrschenden hohen Temperaturen kommt es in der zweiten Sauerstofftrenneinrichtung 37 bzw. in deren erster Kammer 39 zu einer Verbrennungsreaktion. Dementsprechend arbeitet die zweite Sauerstofftrenneinrichtung 37 als Membran-Reaktor.

Durch die Verbrennungsreaktion bilden sich in der ersten Kammer 39 wiederum heiße Verbrennungsabgase 48, die durch einen ersten Ausgang 85 der zweiten Sauerstofftrenneinrichtung 37 aus der ersten Kammer 39 und bei 14 aus der Vorrichtung 1 austreten. Durch den Betrieb der zweiten Sauerstofftrenneinrichtung 37 wird dem sauerstoffhaltigen Gas 34 noch mehr Sauerstoff entzogen, wobei es durch die Reaktion in der ersten Kammer 39 gleichzeitig stark erhitzt wird. Das erhitzte, nunmehr im wesentlichen sauerstoffarme Gas 49 tritt durch einen zweiten Ausgang 86 aus der zweiten Kammer 40 und bei 35 aus der Vorrichtung 1 aus. Beachtenswert ist auch hierbei die parallele bzw. gleichgerichtete Durchströmung der Kammern 39 und 40 der zweiten Sauerstofftrenneinrichtung 37. Durch die gewählte Durchströmung können Temperaturspitzen vermieden werden, wodurch sich die Lebensdauer der Membran 38 erhöht.

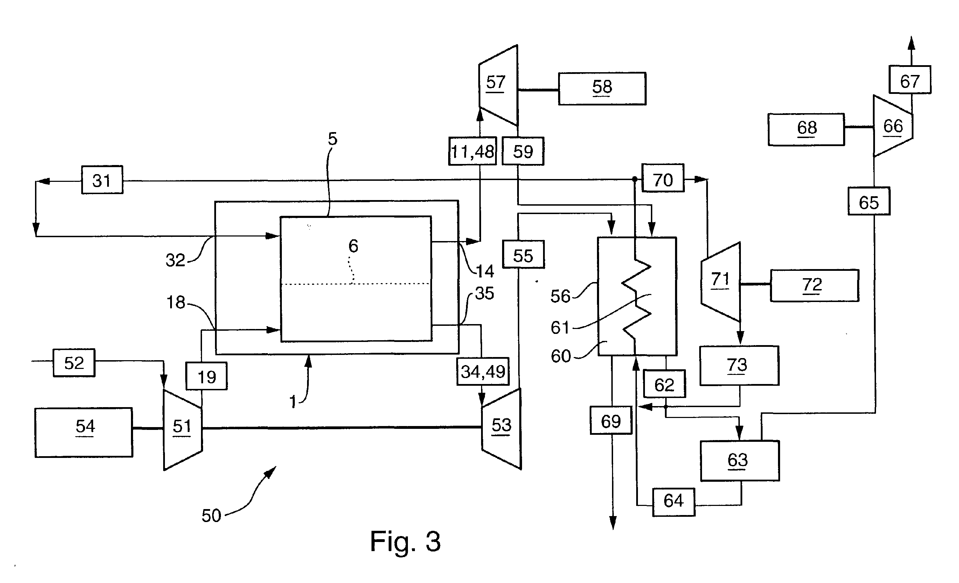

Entsprechend Fig. 3 kann die erfindungsgemäße Vorrichtung 1 in eine Gasturbinenanlage 50 integriert sein, die zur Stromgewinnung dient. Vom komplexen Aufbau der erfindungsgemäßen Vorrichtung 1 ist in Fig. 3 nur die Sauerstofftrenneinrichtung 5 mit der Membran 6 exemplarisch dargestellt. Grundsätzlich kann sowohl die Ausführungsform gemäß Fig. 1 als auch die Ausführungsform gemäß Fig. 2 sowie eine beliebige andere erfindungsgemäße Variante der Vorrichtung 1 in die Gasturbinenanlage 50 implementiert werden.

Ein Verdichter 51 komprimiert Umgebungsluft 52. Die erwärmte und komprimierte Umgebungsluft bildet das sauerstoffhaltige Gas 19, das bei 18 der Vorrichtung 1 zugeführt wird. In dieser Vorrichtung 1 wird die Umgebungsluft erhitzt und bezüglich ihres Sauerstoffgehalts reduziert. Die erhitzte, sauerstoffarme Luft 34 (Variante gemäß Fig. 2) bzw. 49 (Variante gemäß Fig. 2) tritt bei 35 aus der Vorrichtung 1 aus und wird einer Turbine 53 zugeführt, die mit dem Verdichter 51 und einem Generator 54 zur Stromerzeugung verbunden ist. Das der Turbine 53 zugeführte Gas 34 bzw. 49 wird in der Turbine 53 entspannt und bildet eine entspannte Strömung 55, deren Wärme in einem Dampferzeuger 56 zurückgewonnen wird. Aus dem Dampferzeuger 56 tritt dann gekühltes, sauerstoffarmes Gas 69 aus, das dann weiter behandelt werden kann.

Bei 32 wird der Vorrichtung 1 Kraftstoff oder Kraftstoff-Dampf-Gemisch 31 zugeführt, wobei der Kraftstoff im Inneren der Vorrichtung 1 - wie oben beschrieben - mit dem Sauerstoff aus dem sauerstoffhaltigen Gas 19 verbrennt. Die daraus resultierende Verbrennung erzeugt im wesentlichen nur noch CO₂ und H₂O und bildet die gewünschten heißen Verbrennungsabgase 11 (Variante gemäß Fig. 1) bzw. 48 (Variante gemäß Fig. 2), welche die Vorrichtung 1 bei 14 verlassen. Die heißen Verbrennungsabgase 11, 48 werden in einer Turbine 57 entspannt, die einen weiteren Generator 58 zur Stromerzeugung antreibt. Dabei bilden sich entspannte Verbrennungsabgase 59, die ebenfalls dem Dampferzeuger 56 zugeführt werden. Dabei enthält der Dampferzeuger 56 getrennte Kammern 60 und 61 für die entspannten, sauerstoffarmen Gase 55 bzw. für die entspannten Verbrennungsabgase 59. Aus dem Dampferzeuger 56 tritt nunmehr gekühltes Verbrennungsabgas 62 aus, das einem Kühler 63 zugeführt werden kann, in dem der im Abgas 62 enthaltene Wasserdampf kondensiert wird. Dabei sich bildendes Wasser 64 wird wieder dem Dampferzeuger 56 zugeführt. Das übrigbleibende CO₂ 65 verläßt den Kühler 63 und kann in einem Verdichter 66 komprimiert und ggf. verflüssigt werden. Das komprimierte und/oder flüssige CO₂ 67 kann dann weiter verarbeitet werden. Der Verdichter 66 wird beispielsweise durch einen Motor 68 angetrieben. Ebenso ist eine Kopplung mit der Turbine 57 denkbar.

Der vom Dampferzeuger 56 generierte Dampf 70 kann in einer Turbine 71 entspannt werden, die einen weiteren Generator 72 zur Stromerzeugung antreibt. Der entspannte Dampf kann dann in einem Kondensator 73 zu Wasser kondensiert und wieder in den Dampferzeuger 56 eingeleitet werden. Darüber hinaus ist es möglich, den Dampf 70 als Prozeßdampf für andere Zwecke zu verwenden, beispielsweise kann der Dampf 70 dem Kraftstoff 31 zugemischt werden, um ein Kraftstoff-Dampf-Gemisch zu bilden.

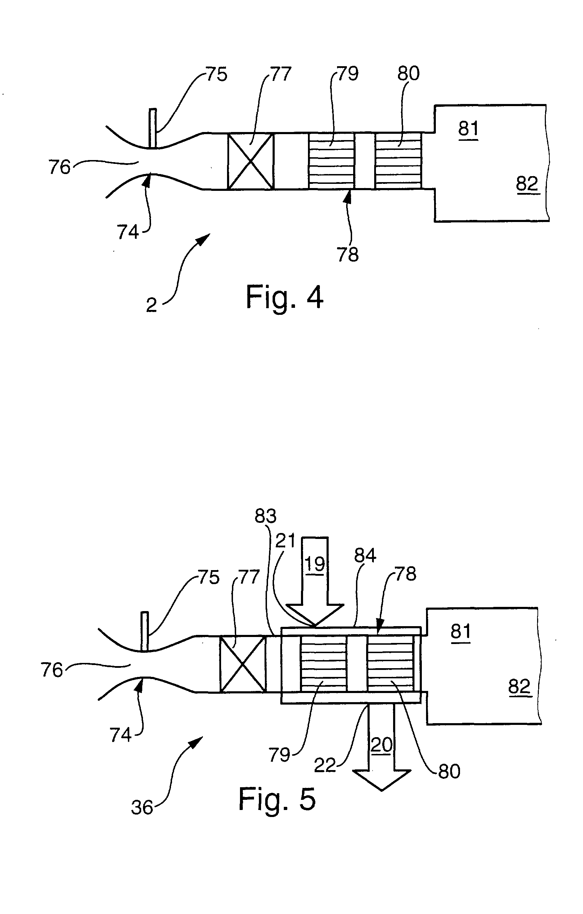

Entsprechend den Fig. 4 und 5 weist der Brenner 2 (Fig. 4) bzw. die Wärmetauscher-Brenner-Einheit 36 (Fig. 5) einen Kraftstoff-Oxidator-Mischer 74 auf, der beispielsweise durch eine Einspritzdüse 75 und einen Venturi-Mischbereich 76 gebildet ist. Alternativ oder zusätzlich kann ein statischer Mischer 77 vorgesehen sein. Des weiteren ist der Katalysator 78 vorgesehen, der aus einem oder mehreren Katalysatorelementen bestehen kann. Im vorliegenden Beispiel besteht der Katalysator 78 aus zwei in Reihe angeordneten Katalysatorelementen 79 und 80. Jedes dieser Katalysatorelemente 79, 80 ist vorzugsweise als monolithischer Träger mit parallelen Durchströmungskanälen ausgebildet und besteht vorzugsweise aus Metalloxid. Aufgrund der parallelen Durchströmungskanäle besitzen die Katalysatorelemente 79, 80 und somit der gesamte Katalysator 78 nur einen relativ geringen Strömungswiderstand, so daß sich bei der Durchströmung des Katalysators 78 nur ein relativ geringer Druckverlust einstellt.

Das bezüglich der Durchströmung des Brenners 2 bzw. der Wärmetauscher-Brenner-Einheit 36 stromauf liegenden Katalysatorelement 79 besteht zweckmäßig aus einem aktiveren Katalysatormaterial als das stromab liegende Katalysatorelement 80. Des weiteren ist es zweckmäßig, das stromab liegende Katalysatorelement 80 aus einem thermisch stabileren Material herzustellen als das stromauf liegende Katalysatorelement 79. Während somit das stromauf liegende Katalysatorelement 79 sich in besonderer Weise für eine Iniziierung der Verbrennung eignet, kann das stromab liegende Katalysatorelement 80 besonders gut zur Stabilisierung der Verbrennung dienen. Bei mehr als zwei Katalysatorelementen 79, 80 können dementsprechend ein oder mehrere stromauf liegende Katalysatorelemente 79 aktiver und/oder ein oder mehrere stromab liegende Katalysatorelemente 80 stabiler sein.

An den Katalysator 78 schließt eine Stabilisierungszone 81 an, die eine aerodynamische Stabilisierung der homogenen Reaktionszone bewirkt. Stromab dieser Stabilisierungszone 81 schließt sich eine Ausbrennzone 82 an, in welcher die homogene Reaktion vollständig zu Ende ablaufen kann.

Entsprechend Fig. 5 ist ein Gehäuse 83, in welchem der eigentliche Brenner der Wärmetauscher-Brenner-Einheit 36 ausgebildet ist, zumindest im Bereich des Katalysators 78 von einem Wärmetauscher 84 umhüllt, in den bei 21 relativ kaltes sauerstoffhaltiges Gas 19 eintritt und aus dem bei 22 relativ warmes sauerstoffhaltiges Gas 20 austritt. Durch diese Bauform ergibt sich für die Wärmetauscher-Brenner-Einheit 36 ein besonders kompakter Aufbau.

### Bezugszeichenliste

- 1: Vorrichtung
- 2: Brenner
- 3: Wärmetauscher
- 4: Verdichter
- 5: erste Sauerstofftrenneinrichtung
- 6: Sauerstofftrennmittel, MCM-Membran von 5
- 7: erste Kammer von 5
- 8: zweite Kammer von 5
- 9: Durchgangsseite von 6
- 10: Rückhalteseite von 6
- 11: heißes Verbrennungsabgas
- 12: Ausgangsseite von 2
- 13: Abgasleitung
- 14: Austrittsstelle von 1
- 15: Rückführungsleitung
- 16: erster Eingang von 5
- 17: abgezweigtes Abgas
- 18: Eintrittsstelle von 1
- 19: sauerstoffhaltiges Gas
- 20: erwärmtes sauerstoffhaltiges Gas
- 21: erster Eingang von 3
- 22: erster Ausgang von 3
- 23: zweiter Eingang von 5
- 24: erster Ausgang von 5
- 25: mit Sauerstoff angereichertes, abgezweigtes Abgas
- 26: Leitung
- 27: zweiter Eingang von 3
- 28: zweiter Ausgang von 3
- 29: gekühltes, aufgeladenes, angereichertes, abgezweigtes Abgas
- 30: Eingangsseite von 2
- 31: Kraftstoff/Kraftstoff-Dampf-Gemisch
- 32: Eintrittsstelle von 1
- 33: zweiter Ausgang von 5
- 34: Sauerstoffreduziertes Gas
- 35: Austrittsstelle von 1
- 36: Wärmetauscher-Brenner-Einheit
- 37: zweite Sauerstofftrenneinrichtung
- 38: Sauerstofftrennmittel, MCM-Membran von 37
- 39: erste Kammer von 37
- 40: zweite Kammer von 37
- 41: Durchgangsseite von 38
- 42: Rückhalteseite von 38
- 43: Eingangsseite von 36
- 44: erster Eingang von 37
- 45: Kraftstoff
- 46: Eintrittsstelle von 1
- 47: zweiter Eingang von 37
- 48: heißes Verbrennungsabgas
- 49: heißes sauerstoffarmes Gas
- 50: Gasturbinenanlage
- 51: Verdichter
- 52: Umgebungsluft
- 53: Turbine
- 54: Generator
- 55: entspanntes, heißes sauerstoffarmes Gas
- 56: Dampferzeuger
- 57: Turbine
- 58: Generator
- 59: entspannte, heiße Verbrennungsabgase
- 60: erste Kammer
- 61: zweite Kammer
- 62: entspannte, gekühlte Verbrennungsabgase
- 63: Kühler
- 64: flüssiges Wasser
- 65: CO₂-Gas
- 66: Verdichter
- 67: komprimiertes und/oder flüssiges CO₂
- 68: Motor
- 69: gekühltes, entspanntes sauerstoffarmes Gas
- 70: Wasserdampf
- 71: Turbine
- 72: Generator
- 73: Kondensator
- 74: Kraftstoff-Oxidator-Mischer
- 75: Einspritzdüse
- 76: Venturi-Mischbereich
- 77: statischer Mischer
- 78: Katalysator
- 79: erstes Katalysatorelement
- 80: zweites Katalysatorelement
- 81: Stabilisierungszone
- 82: Ausbrennzone
- 83: Gehäuse
- 84: Wärmetauscher
- 85: erster Ausgang von 37
- 86: zweiter Ausgang von 37
- 87: Ausgangsseite von 36

## Patentansprüche

1. Verfahren zur Erzeugung von heißen Verbrennungsabgasen, insbesondere für eine Gasturbinenanlage,
- bei dem in einem Brenner (2; 36) eine Verbrennung stattfindet, die heiße Verbrennungsabgase (11) erzeugt,
- bei dem ein Teil der Verbrennungsabgase (17) abgezweigt und einem ersten Eingang (16) einer Sauerstofftrenneinrichtung (5) zugeführt wird,
- bei dem einem zweiten Eingang (23) der Sauerstofftrenneinrichtung (5) ein sauerstoffhaltiges Gas (20) zugeführt wird,
- bei dem die Sauerstofftrenneinrichtung (5) Sauerstofftrennmittel (6) aufweist, die dem sauerstoffhaltigen Gas (20) Sauerstoff entnehmen und dem abgezweigten Abgas (17) zuführen und dadurch den Sauerstoffgehalt des sauerstoffhaltigen Gases (20) reduzieren und mit Sauerstoff angereichertes, abgezweigtes Abgas (25) erzeugen,
- bei dem das mit Sauerstoff angereicherte, abgezweigte Abgas (25) sowie ein Kraftstoff (31) oder ein Kraftstoff-Dampf-Gemisch dem Brenner (2; 36) zugeführt werden und ein Verbrennungsgemisch bilden, das im Brenner (2; 36) unter Ausbildung der heißen Verbrennungsabgase (11) verbrennt,
**dadurch gekennzeichnet, daß** die Verbrennung im Brenner (2; 36) katalytisch initiiert und/oder stabilisiert wird.

2. Verfahren nach Anspruch 1, **dadurch gekennzeichnet, daß** das sauerstoffhaltige Gas (20) vor seinem Eintritt in den zweiten Eingang (23) der Sauerstofftrenneinrichtung (5) erwärmt wird.

3. Verfahren nach Anspruch 1 oder 2, **dadurch gekennzeichnet, daß** eine zweite Sauerstofftrenneinrichtung (37) vorgesehen ist, wobei der nicht abgezweigte Teil der heißen Verbrennungsabgase (11) sowie Kraftstoff (45) oder ein Kraftstoff-Dampf-Gemisch einem ersten Eingang (44) der zweiten Sauerstofftrenneinrichtung (37) zugeführt werden und eine Mischung bilden, wobei das bezüglich seines Sauerstoffgehaltes reduzierte sauerstoffhaltige Gas (34) einem zweiten Eingang (47) der zweiten Sauerstofftrenneinrichtung (37) zugeführt wird, wobei auch diese zweite Sauerstofftrenneinrichtung (37) Sauerstofftrennmittel (38) aufweist, die dem sauerstoffhaltigen Gas (34) noch mehr Sauerstoff entnehmen und der Mischung zuführen, wobei einerseits die Mischung mit dem Sauerstoff verbrennt und heiße Verbrennungsabgase (48) erzeugt und andererseits ein hinsichtlich seines Sauerstoffgehaltes nochmals reduziertes und erhitztes Gas (49) erzeugt wird.

4. Vorrichtung zur Erzeugung von heißen Verbrennungsabgasen, insbesondere für eine Gasturbinenanlage,
- mit einem Brenner (2; 36), dessen Ausgangsseite (12; 87) mit einer Abgasleitung (13) verbunden ist, von der eine Rückführungsleitung (15) abzweigt, und
- mit einer Sauerstofftrenneinrichtung (5), deren erster Eingang (16) mit der Rückführungsleitung (15) und deren zweiter Eingang (23) mit einer Gasversorgung verbunden ist, die sauerstoffhaltiges Gas (20) liefert,
- wobei die Sauerstofftrenneinrichtung (5) Sauerstofftrennmittel (6) enthält, die dem sauerstoffhaltigen Gas (20) Sauerstoff entnehmen und dem abgezweigten Abgas (17) zuführen,
- wobei die Sauerstofftrenneinrichtung (5) einen ersten Ausgang (24) für Sauerstoff angereichertes, abgezweigtes Abgas (25) und einen zweiten Ausgang (33) für hinsichtlich seines Sauerstoffgehalts reduziertes Gas (34) besitzt,
- wobei eine Eingangsseite (30; 43) des Brenners (2; 36) mit dem ersten Ausgang (24) der Sauerstofftrenneinrichtung (5) sowie mit einer Kraftstoffversorgung kommuniziert, die Kraftstoff (31) oder ein Kraftstoff-Dampf-Gemisch liefert,
**dadurch gekennzeichnet, daß** der Brenner (2; 36) einen Katalysator (78) enthält, der die Verbrennung initiiert und/oder stabilisiert.

5. Vorrichtung nach Anspruch 4, **dadurch gekennzeichnet, daß**
- eine zweite Sauerstofftrenneinrichtung (37) vorgesehen ist, deren erster Eingang (44) mit der Abgasleitung (13) und mit einer Kraftstoffversorgung kommuniziert, die Kraftstoff (45) liefert,
- ein zweiter Eingang (47) der zweiten Sauerstofftrenneinrichtung (37) mit dem zweiten Ausgang (33) der ersten Sauerstofftrenneinrichtung (5) kommuniziert,
- die zweite Sauerstofftrenneinrichtung (37) Sauerstofftrennmittel (38) aufweist, die dem sauerstoffhaltigen Gas (34) noch mehr Sauerstoff entnehmen und der Mischung aus Kraftstoff (45) und Verbrennungsabgasen (11) zuführen, wobei einerseits die Mischung mit dem Sauerstoff verbrennt und heiße Verbrennungsabgase (48) erzeugt werden und andererseits ein hinsichtlich seines Sauerstoffgehalts nochmals reduziertes und erhitztes Gas (49) erzeugt wird,
- die zweite Sauerstofftrenneinrichtung (37) einen ersten Ausgang (85) für die heißen Verbrennungsabgase (48) und einen zweiten Ausgang (86) für heißes, sauerstoffarmes Gas (49) aufweist.

6. Vorrichtung nach Anspruch 4 oder 5, **dadurch gekennzeichnet, daß** der Katalysator (78) als Metalloxid-Katalysator ausgebildet ist.

7. Vorrichtung nach einem der Ansprüche 4 bis 6, **dadurch gekennzeichnet, daß** der Katalysator (78) einen monolithischen Träger mit parallelen Durchströmungskanälen aufweist.

8. Vorrichtung nach einem der Ansprüche 4 bis 7, **dadurch gekennzeichnet, daß** der Brenner (36) mit einem Wärmetauscher (84) wärmeübertragend verbunden ist, der das sauerstoffhaltige Gas (19) vor dem Eintritt in die Sauerstofftrenneinrichtung (5) erwärmt.

9. Vorrichtung nach einem der Ansprüche 4 bis 8, **dadurch gekennzeichnet, daß**
- zumindest eine der Sauerstofftrenneinrichtungen (5; 37) eine erste Kammer (7; 39) und eine zweite Kammer (8; 40) aufweist,
- die Sauerstofftrennmittel (6; 38) eine Membran aufweisen, die die beiden Kammern (7, 8; 39, 40) voneinander trennt und Sauerstoff von der einen Kammer (8; 40) in die andere Kammer (7; 39) transportiert,
- beide Kammern (7, 8; 39, 40) gleichgerichtet und parallel zur Membran durchströmt werden.

10. Vorrichtung nach einem der Ansprüche 4 bis 9, **dadurch gekennzeichnet, daß** der Brenner (2; 36) stromab des Katalysators (78) eine Ausbrennzone (82) aufweist,

11. Vorrichtung nach Anspruch 10, **dadurch gekennzeichnet, daß** der Brenner (2; 36) zwischen Katalysator (78) und Ausbrennzone (82) eine Stabilisierungszone (81) aufweist.

12. Vorrichtung nach einem der Ansprüche 4 bis 11, **dadurch gekennzeichnet, daß** der Katalysator (78) ein oder mehrere in Reihe angeordnete Katalysatorelemente (79, 80) aufweist.

13. Vorrichtung nach Anspruch 12, **dadurch gekennzeichnet, daß** mindestens ein stromauf liegendes Katalysatorelement (79) aus einem aktiveren Katalysatormaterial besteht als mindestens ein stromab liegendes Katalysatorelement (80).

14. Vorrichtung nach Anspruch 12 oder 13, **dadurch gekennzeichnet, daß** mindestens ein stromab liegendes Katalysatorelement (80) aus einem thermisch stabileren Katalysatormaterial besteht als mindestens ein stromauf liegendes Katalysatorelement (79).
